# FASCICULE DE BREVET EUROPEEN

(11) **EP 0 732 556 B1**
(45) Date de publication et mention de la délivrance du brevet: **10.01.2001**
(21) Numéro de dépôt: 96400538.3
(22) Date de dépôt: 15.03.1996
(51) Int. Cl.: F25J 3/04

(54) **Procédé et appareil de vaporisation d'un débit liquide**
Verfahren und Vorrichtung zur Verdampfung eines Flüssigkeitstromes
Method and apparatus for vaporizing a liquid stream

(30) Priorité: 15.03.1995 FR 9502989
(43) Date de publication de la demande: 18.09.1996
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Tranier, Jean-Pierre, 94800 Villejuif (FR)
(74) Mandataire: Mercey, Fiona Susan

(56) Documents cités:
- FR-A- 2 094 088
- CHEMICAL ABSTRACTS, vol. 107, no. 22, 30 Novembre 1987 Columbus, Ohio, US; abstract no. 201413p, "Cryogenic separation of air" page 179; colonne 1; XP002006438 & CS-A-242 724 (J.BOROVICKA ET AL.)

## Description

La présente invention concerne un procédé et un appareil de vaporisation d'un liquide. Plus particulièrement, elle s'applique à un procédé de vaporisation d'un liquide intégré dans un procédé de séparation d'un mélange gazeux par distillation cryogénique, tel qu'un procédé de distillation d'air.

Il est souvent nécessaire de vaporiser un débit liquide par échange de chaleur latente avec un débit gazeux qui ainsi se condense. On s'intéresse au cas où les deux débits comprennent au moins deux constituants. Si ledit liquide est plus riche que le débit gazeux en constituant le moins volatil, la pression de condensation du débit gazeux à température T sera plus grande que la pression de vaporisation du débit liquide à (T- ΔT).

Par exemple, si l'on vaporise un débit d'oxygène liquide impur (95 % oxygène, 5 % azote) sous une pression de 5 x 10⁵ Pa contre un débit d'air à condenser, la pression d'air de 13 x 10⁵ Pa est entièrement déterminée puisque l'air a une composition fixée (21 % d'oxygène et 79 % d'azote). On considère ici que l'air est un mélange binaire afin de faciliter les comparaisons.

De la même manière, avec un débit d'air à la même pression de 13 x 10⁵ Pa, on vaporiserait un débit d'azote pur sous une pression de l'ordre de 14 x 10⁵ Pa.

Dans nombre de cas, on souhaite réduire la pression du débit de gaz à condenser ou augmenter la pression du débit de liquide à vaporiser, mais la pression minimale est limitée par la composition des débits eux-mêmes. Par exemple, dans un procédé de distillation d'air, on désire réduire le plus possible la pression de l'air d'alimentation.

A cet effet, l'invention a pour objet un procédé selon la revendication 1.

Selon d'autres caractéristiques et avantages de l'invention :
- le constituant moins volatil est l'oxygène et l'autre constituant plus volatil est l'azote ;
- le débit gazeux se condense dans un échangeur situé en cuve de la colonne de mélange.

L'invention a également pour objet un appareil selon la revendication 11.

Selon d'autres caractéristiques :
- les moyens permettant l'échange de chaleur comportent un échangeur situé en cuve de la colonne de mélange.

L'invention a également pour objet un procédé selon la revendication 7.

Ceci permet, dans des conditions particulières, d'augmenter la pression du débit de liquide à vaporiser.

On pourrait également concevoir des procédés et des appareils permettant de modifier la teneur en plusieurs composants d'un mélange après la vaporisation et/ou avant la condensation de celui-ci. Ainsi, pour un mélange ternaire, on pourrait enrichir le mélange en les deux constituants les moins volatils.

L'invention a encore pour objet un appareil selon la revendication 15.

L'invention a enfin pour objet une installation de séparation d'un mélange gazeux par distillation comportant un appareil tel que décrit ci-dessus, dans laquelle le débit liquide est un produit de séparation et le débit gazeux est le mélange gazeux à séparer.

L'invention est particulièrement utile pour des systèmes de distillation cryogénique.

Deux exemples de mise en oeuvre de l'invention vont maintenant être décrits en regard des dessins annexés sur lesquels :
- la figure 1 est un schéma d'un appareil de vaporisation selon l'art antérieur ;
- les figures 2 et 3 sont des schémas d'appareils de vaporisation selon une première et une deuxième variantes de l'invention ;
- les figures 4 et 6 sont des schémas d'installation selon l'art antérieur ;
- la figure 5 est un schéma d'intégration de l'invention selon la deuxième variante de l'invention, dans le schéma de la figure 4 ;
- la figure 7 est un schéma d'intégration de l'invention selon la première variante de l'invention dans le schéma de la figure 6..

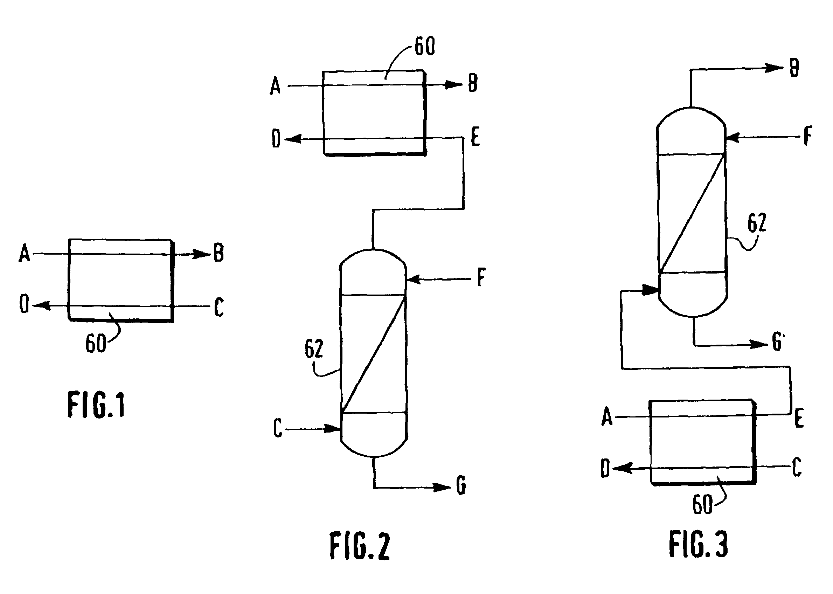

La figure 1 montre un échangeur de chaleur 60 dans lequel un débit de liquide A se vaporise pour former un débit gazeux par échange de chaleur latente avec un débit gazeux C qui se condense, formant un débit liquide D. Les deux débits A et C comprennent au moins deux constituants et C est plus riche que A en constituant plus volatil. Par exemple, A peut être de l'oxygène liquide impur (95 % O₂, 5 % N₂) et C peut être de l'air (79 % N₂, 21 % O₂). Dans ce cas, si A est à 5 × 10⁵ Pa, C doit être à 13 × 10⁵ Pa.

Mettant en oeuvre l'invention, dans un premier procédé illustré à la figure 2, on continue de vaporiser un débit d'oxygène liquide impur A à 5 × 10⁵Pa (95 % O₂, 5% N₂) dans l'échangeur 60. On modifie la composition du débit d'air gazeux à condenser C en l'envoyant en cuve d'une colonne de mélange 62, alimentée en tête par un débit liquide F ayant une composition de 70 % O₂, 30 % N₂. On récupère de la colonne 62 un gaz de tête E à 40 % d'oxygène qui se condense à une pression beaucoup plus basse que le débit d'air C. On peut ainsi réduire la pression du débit d'air gazeux C à 9 × 10⁵ Pa.

L'invention de la figure 2 s'applique aussi au cas où l'on vaporise un fluide plus volatil tel l'azote liquide à 14 × 10⁵ Pa. Au lieu de condenser dans l'échangeur 60 de la figure 1 un débit d'air à 13 × 10⁵ Pa, on enrichit ce débit d'air dans la colonne de mélange 62 pour produire en tête un gaz plus riche en oxygène que l'air.

Ainsi, le fluide C que l'on condense est enrichi en oxygène avant sa condensation.

Mettant en oeuvre l'invention, dans un deuxième procédé illustré à la figure 3, c'est la composition du liquide vaporisé que l'on modifie. Le but, ici, est de produire un débit gazeux B d'oxygène impur à 95 % O₂ à 5 × 10⁵ Pa en condensant un débit gazeux C qui est de l'air à 9 × 10⁵ Pa d'une composition 21 % O₂, 79 % N₂ (considérant l'air comme un mélange binaire).

On choisit un liquide A moins riche en oxygène que le débit gazeux B que l'on veut produire qui, à la pression de 5 × 10⁵ Pa, se vaporise à la température de condensation de l'air à 9 bar. Le liquide A a une composition de 70 % O₂ , 30 % N₂ et se vaporise dans l'échangeur 60. Après cette vaporisation, le fluide E est enrichi en oxygène dans une colonne de mélange 62, également alimentée par un débit liquide F' ayant une composition de 98 % O₂, 2 % N₂. On soutire en tête de la colonne 62 un débit gazeux B ayant la composition souhaitée de 95 % O₂, 5 % N₂.

Ainsi, ce deuxième procédé comprend l'étape d'enrichir en oxygène le fluide vaporisé après sa vaporisation en condensant de l'air à une pression inférieure à celle qui aurait été nécessaire pour vaporiser l'oxygène impur à la même pression.

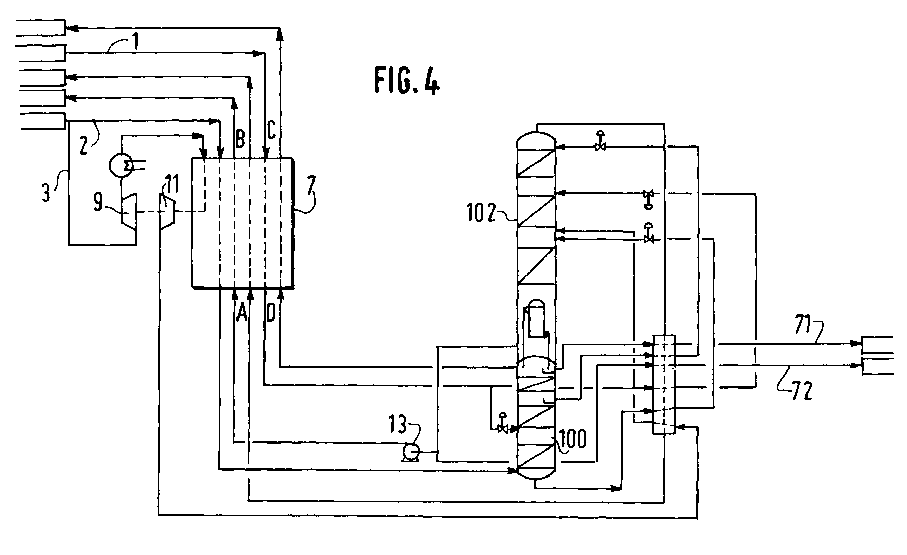

Dans un appareil de production d'oxygène liquide à pompe classique tel que celui illustré à la figure 4, trois débits d'air sont envoyés à l'échangeur principal dans lequel s'effectue la vaporisation d'un débit d'oxygène liquide sous pression. Le premier débit 1 est à 13 × 10⁵ Pa. Le reste de l'air (environ 70 %) est comprimé jusqu'à 5 × 10⁵ Pa et divisé en deux. Un deuxième débit 2 traverse l'échangeur 7 et est envoyé dans la colonne moyenne pression 100 d'une double colonne de distillation. Le troisième débit 3 est surpressé par un surpresseur 9 à 10 × 10⁵ Pa, refroidi et détendu par une turbine 11, couplée au surpresseur jusqu'à une pression légèrement au-dessus de celle de la colonne basse pression 102 puis envoyé à la colonne basse pression 102 après une étape de sous-refroidissement.

Seul le premier débit 1 est liquéfié dans l'échangeur 7 à cause de sa pression plus élevée ; il est divisé en deux et injecté dans les colonnes basse et moyenne pression.

La production d'oxygène impur à 95 % est soutirée sous forme liquide en cuve de la colonne basse pression 102 et pressurisée par la pompe 13 jusqu'à 5 × 10⁵ Pa puis vaporisée dans l'échangeur 7.

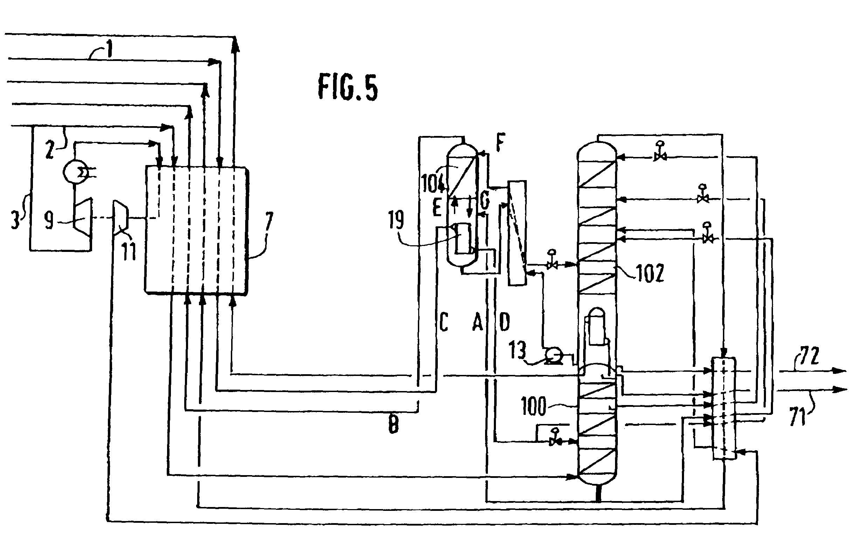

Afin de réduire la pression de l'air qui vaporise l'oxygène, nous appliquons l'invention de la figure 3 à un appareil de production d'oxygène liquide à pompe tel que celui illustré dans la figure 5, où nous retrouvons les mêmes éléments que dans la figure 4, avec les mêmes références numériques.

La plupart des pressions sont identiques mais le débit d'air C n'est plus qu'à 9 × 10⁵ Pa. Le débit d'air C n'est plus condensé en traversant l'échangeur 7 mais se condense dans le condenseur de cuve 19 d'une colonne de mélange 104. De l'oxygène liquide impur à 98 % d'oxygène soutiré en cuve de la colonne basse pression 102 et comprimé par la pompe 13 est envoyé en tête de la colonne de mélange et le débit de liquide riche est envoyé de la cuve de la colonne moyenne pression 100 dans la cuve de la colonne de mélange 104. On soutire en tête de la colonne de mélange un gaz B à la pureté désirée en oxygène (95 %). Le liquide à vaporiser dans l'échangeur 19 est un mélange de liquide riche soutiré de la colonne moyenne pression 100 et de liquide à 80 % d'O₂ qui vient du plateau de cuve de la colonne de mélange. On soutire en cuve un liquide G' à 76 % O₂ non vaporisé, en équilibre avec une vapeur E à 55 % O₂ qui alimente la colonne.

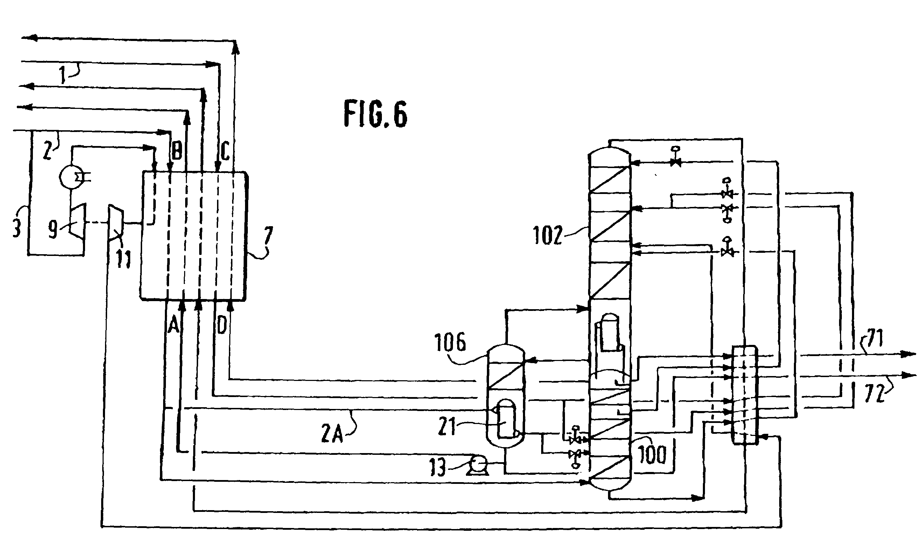

La figure 6 montre un schéma classique d'un appareil à pompe produisant de l'oxygène sous pression à partir d'air distillé dans une double colonne constituée d'une colonne moyenne pression 100 et d'une colonne basse pression 106, 102 comprenant deux vaporiseurs/condenseurs ; un vaporiseur intermédiaire condense l'azote de tête de la colonne moyenne pression pour l'envoyer en reflux en tête de deux colonnes ; un vaporiseur de cuve 21 du tronçon inférieur 106 de la colonne basse pression condense un débit d'air par vaporisation d'oxygène liquide assurant ainsi le chauffage en cuve de cette colonne. La pression de la colonne moyenne pression est ici définie par la pression de condensation de la fraction d'air 2A qui vaporise l'oxygène impur (95 % O₂) dans le vaporiseur 21.

L'oxygène liquide soutiré de la cuve de la colonne basse pression est pressurisé à 5 × 10⁵ Pa en 13, envoyé à l'échangeur où il est vaporisé par condensation d'un débit d'air à 13 × 10⁵ Pa.

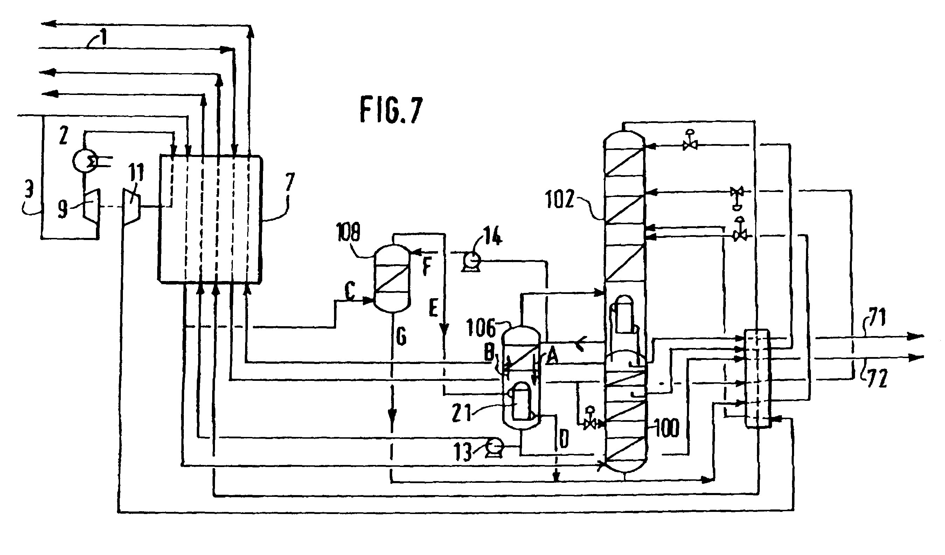

Afin de réduire la pression de l'air envoyé en colonne moyenne pression, on applique l'invention de la figure 2 à l'appareil de production d'oxygène à pompe de la figure 6. La figure 7 illustre cette nouvelle disposition avantageuse.

La fraction d'air à distiller, utilisée pour assurer le chauffage de la cuve de colonne basse pression et correspondant au débit C des figures 2 est envoyée en cuve d'une colonne de mélange 108 où elle est mise en contact avec un liquide F pressurisé 14 riche en oxygène issu d'un niveau intermédiaire de la colonne basse pression. Au contact de ce liquide, l'air s'enrichit en oxygène et on soutire de la colonne 108 un débit E de composition 40 % O₂, 60 % N₂ qui se condense dans le vaporiseur 21 de cuve de la colonne basse pression. Le liquide de cuve G de la colonne de mélange à concentration en oxygène de 40 % est mélangé au liquide D et au liquide riche soutiré en cuve de la colonne moyenne pression 100. Ces liquides servent de reflux pour la colonne basse pression 102.

Cette disposition permet une réduction d'environ 20 % de la pression d'air, d'où un gain en énergie sur le compresseur d'air principal.

L'invention ne s'applique pas uniquement au cas où un mélange binaire liquide se vaporise par échange de chaleur avec un mélange binaire gazeux qui se condense. On pourrait aisément envisager de mettre en oeuvre l'invention pour vaporiser un liquide ne comportant qu'un constituant contre un mélange gazeux contenant ce constituant ainsi qu'une quantité moindre d'un autre gaz, plus volatil que le constituant commun.

L'invention s'applique également à d'autres gaz et d'autres liquides.

L'invention s'applique également aux cas où les fluides B (fig. 2), E (fig. 3) sont partiellement vaporisés et les fluides D (fig. 2 et 3) sont partiellement condensés.

## Revendications (Revendications pour l'(les) Etat(s) contractant(s) suivant(s): DE, FR, GB, IT, NL, SE)

1. Procédé de vaporisation d'un débit liquide par échange de chaleur avec un débit gazeux (C) qui se condense, les deux débits (C) comprenant au moins deux constituants caractérisé en ce que le débit liquide se vaporise par échange de chaleur avec le débit gazeux pour produire un débit vaporisé et ensuite le débit vaporisé s'enrichit en constituant moins volatil dans une colonne de mélange (104), alimentée en tête par un liquide (F) plus riche en constituant moins volatil que le débit vaporisé à enrichir.

2. Procédé selon la revendication 1 dans lequel le débit gazeux se condense dans un échangeur (19) situé en cuve de la colonne de mélange (104).

3. Procédé selon l'une des revendications 1 ou 2 dans lequel le débit gazeux ( C) qui se condense dans l'échangeur (19) est de l'air, on vaporise une fraction de liquide riche en oxygène en cuve de la colonne de mélange (104) par échange de chaleur avec l'air et on envoie de l'oxygène liquide (F), soutiré en cuve d'une colonne basse pression (102) d'un appareil de séparation d'air comprenant une double colonne, en tête de colonne de mélange mettant en relation d'échange de chaleur et de matière le liquide vaporisé et l'oxygène liquide et on soutire de l'oxygène impur gazeux (B) en tête de la colonne de mélange, de pureté légèrement inférieure à celle de l'oxygène liquide alimentant la colonne de mélange.

4. Procédé selon la revendication 3 dans lequel l'oxygène liquide est pressurisé dans une pompe (13) avant d'être envoyé à la colonne de mélange.

5. Procédé selon l'une de revendications 3 ou 4 dans lequel on envoie le liquide (G) de cuve de la colonne de mélange à la colonne basse pression.

6. Procédé selon l'une des revendications 3 à 5 dans lequel la fraction de liquide est un mélange de liquide riche provenant de la colonne moyenne pression de l'appareil de séparation d'air et de liquide provenant du plateau de cuve de la colonne de mélange.

7. Procédé de séparation d'air dans un appareil de distillation cryogénique comprenant une colonne de mélange (108) et une double colonne, alimentée par de l'air comprenant une colonne moyenne pression (100) et une colonne basse pression (102,106) dans lequel un débit d'oxygène liquide (A) se vaporise par échange de chaleur avec un débit gazeux enrichi en constituant moins volatil (E) constitué par de l'air qui se condense, les deux débits (A, C) comprenant au moins deux constituants, dans lequel le débit gazeux est envoyé en cuve de la colonne de mélange (108) où il s'enrichit en constituant moins volatil pour former le débit gazeux enrichi, la colonne de mélange étant alimentée en tête par un liquide (F) plus riche en constituant moins volatil que le débit gazeux, pour former le débit gazeux enrichi et ensuite le débit gazeux enrichi se condense par échange de chaleur avec le débit liquide dans un vaporiseur de cuve (21) de la colonne basse pression (102,106), ladite colonne basse pression contenant un vaporiseur intermédiaire qui condense l'azote de tête de la colonne moyenne pression et aucun autre vaporiseur intermédiaire.

8. Procédé selon la revendication 7 dans lequel on vaporise l'oxygène produit en cuve de la colonne basse pression par échange de chaleur avec une vapeur (E), plus riche en oxygène que l'air, qui se condense dans l'échangeur (21), la dite vapeur étant soutirée de la tête de la colonne de mélange (108) mettant en relation d'échange de chaleur et de matière une fraction d'air à distiller ( C) et un liquide (F) plus riche en oxygène que l'air, issu d'un niveau intermédiaire de la colonne basse pression.

9. Procédé selon la revendication 8 dans lequel le liquide (G) soutiré en cuve de la colonne de mélange (104,108) et la vapeur condensée sont envoyés dans la colonne basse pression (102).

10. Procédé selon l'une des revendications 1 à 9 dans lequel le constituant le moins volatil est l'oxygène et le plus volatil est l'azote.

11. Appareil de séparation d'air et de vaporisation d'un débit liquide par échange de chaleur indirect avec un débit gazeux ( C) constitué par de l'air, les deux débits comprenant au moins deux constituants, comprenant des moyens (19) permettant l'échange de chaleur indirect entre le débit gazeux et le débit liquide, une colonne de mélange (104) pour enrichir le débit liquide vaporisé en aval des moyens permettant l'échange de chaleur, une double colonne de séparation d'air comprenant une colonne moyenne pression (100) et une colonne basse pression (102) et des moyens pour envoyer de l'oxygène liquide en tête de la colonne de mélange.

12. Appareil selon la revendication 11 dans lequel les moyens permettant l'échange de chaleur indirect sont constitués par un échangeur (19) situé en cuve de la colonne de mélange (104).

13. Appareil selon la revendication 12 ou 13 comprenant des moyens pour envoyer du liquide riche de la cuve de la colonne moyenne pression (100) en cuve de la colonne de mélange (104).

14. Appareil selon la revendication 11, 12 ou 13 comprenant des moyens de soutirer un gaz de la tête riche en oxygène de la colonne de mélange.

15. Appareil de séparation d'air par distillation cryogénique et de vaporisation d'un débit d'oxygène liquide (A) par échange de chaleur indirect avec un débit gazeux (C) d'air, les deux débits (A, C) comprenant au moins deux constituants, comprenant une colonne de mélange (108) et une double colonne, alimentée par de l'air comprenant une colonne moyenne pression (100) et une colonne basse pression (102, 106), des moyens pour alimenter en cuve la colonne de mélange par le débit gazeux qui s'enrichit en constituant moins volatil dans la colonne de mélange pour former le débit gazeux enrichi, des moyens pour alimenter en tête la colonne de mélange par un liquide (F) plus riche en constituant moins volatil que le débit gazeux, pour former le débit gazeux enrichi et des moyens pour envoyer le débit gazeux enrichi dans un vaporiseur de cuve (21) de la colonne basse pression (102, 106) où il se condense par échange de chaleur indirect avec le débit liquide en cuve de la colonne basse pression, ladite colonne basse pression contenant un vaporiseur intermédiaire qui condense l'azote de tête de la colonne moyenne pression et aucun autre vaporiseur.

16. Appareil selon la revendication 15 comprenant une pompe (13) pour pressuriser le liquide de cuve de la colonne basse pression (102, 106) et un échangeur (7) pour vaporiser le liquide pompé.

17. Appareil selon la revendication 15 ou 16 comprenant des moyens pour envoyer de l'air gazeux à distiller en cuve de la colonne de mélange et à la colonne moyenne pression.

## Revendications (Revendications pour l'(les) Etat(s) contractant(s) suivant(s): BE, ES)

1. Procédé de vaporisation d'un débit liquide par échange de chaleur avec un débit gazeux (C) qui se condense, les deux débits (C) comprenant au moins deux constituants caractérisé en ce que le débit liquide se vaporise par échange de chaleur avec le débit gazeux pour produire un débit vaporisé et ensuite le débit vaporisé s'enrichit en constituant moins volatil dans une colonne de mélange (104), alimentée en tête par un liquide (F) plus riche en constituant moins volatil que le débit vaporisé à enrichir.

2. Procédé selon la revendication 1 dans lequel le débit gazeux se condense dans un échangeur (19) situé en cuve de la colonne de mélange (104).

3. Procédé selon l'une des revendications 1 ou 2 dans lequel le débit gazeux ( C) qui se condense dans l'échangeur (19) est de l'air, on vaporise une fraction de liquide riche en oxygène en cuve de la colonne de mélange (104) par échange de chaleur avec l'air et on envoie de l'oxygène liquide (F), soutiré en cuve d'une colonne basse pression (102) d'un appareil de séparation d'air comprenant une double colonne, en tête de colonne de mélange mettant en relation d'échange de chaleur et de matière le liquide vaporisé et l'oxygène liquide et on soutire de l'oxygène impur gazeux (B) en tête de la colonne de mélange, de pureté légèrement inférieure à celle de l'oxygène liquide alimentant la colonne de mélange.

4. Procédé selon la revendication 3 dans lequel l'oxygène liquide est pressurisé dans une pompe (13) avant d'être envoyé à la colonne de mélange.

5. Procédé selon l'une de revendications 3 ou 4 dans lequel on envoie le liquide (G) de cuve de la colonne de mélange à la colonne basse pression.

6. Procédé selon l'une des revendications 3 à 5 dans lequel la fraction de liquide est un mélange de liquide riche provenant de la colonne moyenne pression de l'appareil de séparation d'air et de liquide provenant du plateau de cuve de la colonne de mélange.

7. Procédé de séparation d'air dans un appareil de distillation cryogénique comprenant une colonne de mélange (108) et une double colonne, alimentée par de l'air comprenant une colonne moyenne pression (100) et une colonne basse pression (102,106) dans lequel un débit d'oxygène liquide (A) se vaporise par échange de chaleur avec un débit gazeux enrichi en constituant moins volatil (E) constitué par l'air qui se condense, les deux débits (A, C) comprenant au moins deux constituants, dans lequel le débit gazeux est envoyé en cuve de la colonne de mélange (108) où il s'enrichit en constituant moins volatil pour former le débit gazeux enrichi, la colonne de mélange étant alimentée en tête par un liquide (F) plus riche en constituant moins volatil que le débit gazeux, pour former le débit gazeux enrichi et ensuite le débit gazeux enrichi se condense par échange de chaleur avec le débit liquide dans un vaporiseur de cuve (21) de la colonne basse pression (102,106), ladite colonne basse pression contenant un vaporiseur intermédiaire qui condense l'azote de tête de la colonne moyenne pression et aucun autre vaporiseur intermédiaire.

8. Procédé selon la revendication 7 dans lequel on vaporise l'oxygène produit en cuve de la colonne basse pression par échange de chaleur avec une vapeur (E), plus riche en oxygène que l'air, qui se condense dans l'échangeur (21), la dite vapeur étant soutirée de la tête de la colonne de mélange (108) mettant en relation d'échange de chaleur et de matière une fraction d'air à distiller ( C) et un liquide (F) plus riche en oxygène que l'air, issu d'un niveau intermédiaire de la colonne basse pression.

9. Procédé selon la revendication 8 dans lequel le liquide (G) soutiré en cuve de la colonne de mélange (104,108) et la vapeur condensée sont envoyés dans la colonne basse pression (102).

10. Procédé selon l'une des revendications 1 à 9 dans lequel le constituant le moins volatil est l'oxygène et le plus volatil est l'azote.

11. Appareil de séparation d'air et de vaporisation d'un débit liquide par échange de chaleur indirect avec un débit gazeux ( C) constitué par de l'air, les deux débits comprenant au moins deux constituants, comprenant des moyens (19) permettant l'échange de chaleur indirect entre le débit gazeux et le débit liquide, une colonne de mélange (104) pour enrichir le débit liquide vaporisé en aval des moyens permettant l'échange de chaleur, une double colonne de séparation d'air comprenant une colonne moyenne pression (100) et une colonne basse pression (102) et des moyens pour envoyer de l'oxygène liquide en tête de la colonne de mélange.

12. Appareil selon la revendication 11 dans lequel les moyens permettant l'échange de chaleur indirect sont constitués par un échangeur (19) situé en cuve de la colonne de mélange (104).

13. Appareil selon la revendication 12 ou 13 comprenant des moyens pour envoyer du liquide riche de la cuve de la colonne moyenne pression (100) en cuve de la colonne de mélange (104).

14. Appareil selon la revendication 11, 12 ou 13 comprenant des moyens de soutirer un gaz riche en oxygène de la tête de la colonne de mélange.

15. Appareil de séparation d'air par distillation cryogénique et de vaporisation d'un débit d'oxygène liquide (A) par échange de chaleur indirect avec un débit gazeux (C) d'air, les deux débits (A, C) comprenant au moins deux constituants, comprenant une colonne de mélange (108) et une double colonne, alimentée par de l'air comprenant une colonne moyenne pression (100) et une colonne basse pression (102, 106), des moyens pour alimenter en cuve la colonne de mélange par le débit gazeux qui s'enrichit en constituant moins volatil dans la colonne de mélange pour former le débit gazeux enrichi, des moyens pour alimenter en tête la colonne de mélange par un liquide (F) plus riche en constituant moins volatil que le débit gazeux, pour former le débit gazeux enrichi et des moyens pour envoyer le débit gazeux enrichi dans un vaporiseur de cuve (21) de la colonne basse pression (102, 106) où il se condense par échange de chaleur indirect avec le débit liquide en cuve de la colonne basse pression, ladite colonne basse pression contenant un vaporiseur intermédiaire qui condense l'azote de tête de la colonne moyenne pression et aucun autre vaporiseur.

16. Appareil selon la revendication 15 comprenant une pompe (13) pour pressuriser le liquide de cuve de la colonne basse pression (102, 106) et un échangeur (7) pour vaporiser le liquide pompé.

17. Appareil selon la revendication 15 ou 16 comprenant des moyens pour envoyer de l'air gazeux à distiller en cuve de la colonne de mélange et à la colonne moyenne pression.

## Patentansprüche (Patentansprüche für folgende(n) Vertragsstaat(en): DE, FR, GB, IT, NL, SE)

1. Verfahren zur Verdampfung eines Flüssigkeitsstroms durch Wärmeaustausch mit einem kondensierenden Gasstrom (C), wobei die beiden Ströme (C) mindestens zwei Bestandteile enthalten, dadurch gekennzeichnet, daß man den Flüssigkeitsstrom durch Wärmeaustausch mit dem Gasstrom unter Bildung eines verdampften Stroms verdampft und danach den verdampften Strom in einer Mischsäule (104), die über Kopf mit einer Flüssigkeit (F), die an einem weniger flüchtigen Bestandteil reicher als der anzureichernde verdampfte Strom ist, gespeist wird, mit dem weniger flüchtigen Bestandteil anreichert.

2. Verfahren nach Anspruch 1, bei dem man den Gasstrom in einem im Sumpf der Mischsäule (104) angeordneten Austauscher (19) kondensiert.

3. Verfahren nach Anspruch 1 oder 2, bei dem es sich bei dem im Austauscher (19) kondensierenden Gasstrom (C) um Luft handelt, man im Sumpf der Mischsäule (104) durch Wärmeaustausch mit der Luft eine sauerstoffreiche Flüssigkeitsfraktion verdampft, aus dem Sumpf einer Niederdrucksäule (102) einer Doppelsäulen-Luftzerlegungsanlage abgezogenen flüssigen Sauerstoff (F) dem Kopf der Mischsäule, die den Wärme- und Stoffaustausch zwischen der verdampften Flüssigkeit und dem flüssigen Sauerstoff herstellt, zuführt und am Kopf der Mischsäule gasförmigen unreinen Sauerstoff (B) mit einer Reinheit, die geringfügig unter der des die Mischsäule speisenden flüssigen Sauerstoffs liegt, abzieht.

4. Verfahren nach Anspruch 3, bei dem man den flüssigen Sauerstoff vor der Zuführung zur Mischsäule in einer Pumpe (13) mit Druck beaufschlagt.

5. Verfahren nach Anspruch 3 oder 4, bei dem man die Flüssigkeit (G) aus dem Sumpf der Mischsäule der Niederdrucksäule zuführt.

6. Verfahren nach einem der Ansprüche 3 bis 5, bei dem es sich bei der Flüssigkeitsfraktion um ein Gemisch aus angereicherter Flüssigkeit aus der Mitteldrucksäule der Luftzerlegungsanlage und Flüssigkeit aus dem Sumpfboden der Mischsäule handelt.

7. Verfahren zur Zerlegung von Luft in einer Tieftemperaturdestillationsanlage mit einer Mischsäule (108) und einer mit Luft gespeisten Doppelsäule mit einer Mitteldrucksäule (100) und einer Niederdrucksäule (102, 106), in der ein flüssiger Sauerstoffstrom (A) durch Wärmeaustausch mit einem aus kondensierender Luft bestehenden, an dem weniger flüchtigen Bestandteil angereicherten Gasstrom (E) verdampft, wobei die beiden Ströme (A, C) mindestens zwei Bestandteile enthalten, bei dem man den Gasstrom dem Sumpf der Mischsäule (108) zuführt, wo er mit dem weniger flüchtigen Bestandteil unter Bildung des angereicherten Gasstroms angereichert wird, wobei die Mischsäule über Kopf mit einer Flüssigkeit (F), die an dem weniger flüchtigen Bestandteil reicher als der Gasstrom ist, gespeist wird, wobei man den angereicherten Gasstrom enthält, und danach den angereicherten Gasstrom durch Wärmeaustausch mit dem Flüssigkeitsstrom in einem Sumpfverdampfer (21) der Niederdrucksäule (102, 106) kondensiert, wobei die Niederdrucksäule einen Zwischenverdampfer, in dem der Kopfstickstoff aus der Mitteldrucksäule kondensiert wird, und keinen anderen Zwischenverdampfer enthält.

8. Verfahren nach Anspruch 7, bei dem man den im Sumpf der Niederdrucksäule anfallenden Sauerstoff durch Wärmeaustausch mit einem Dampf (E), der sauerstoffreicher als die im Austauscher (21) kondensierende Luft ist, verdampft, wobei der Dampf am Kopf der Mischsäule (108), die den Wärme- und Stoffaustausch zwischen einer zu destillierenden Luftfraktion (C) und einer Flüssigkeit (F), die sauerstoffreicher als die auf einer Zwischenhöhe der Niederdrucksäule entnommene Luft ist, herstellt, abgezogen wird.

9. Verfahren nach Anspruch 8, bei dem man die aus dem Sumpf der Mischsäule (104, 108) abgezogene Flüssigkeit (G) und den kondensierten Dampf der Niederdrucksäule (102) zuführt.

10. Verfahren nach einem der Ansprüche 1 bis 9, bei dem es sich bei dem weniger flüchtigen Bestandteil um Sauerstoff und bei dem flüchtigeren Bestandteil um Stickstoff handelt.

11. Anlage zur Zerlegung von Luft und zur Verdampfung eines Flüssigkeitsstroms durch indirekten Wärmeaustausch mit einem aus Luft bestehenden Gasstrom (C), wobei die beiden Ströme mindestens zwei Bestandteile enthalten, mit Mitteln (19) zum indirekten Wärmeaustausch zwischen dem Gasstrom und dem Flüssigkeitsstrom, einer Mischsäule (104) zum Anreichern des verdampften Flüssigkeitsstroms hinter den Wärmeaustauschmitteln, einer Luftzerlegungs-Doppelsäule mit einer Mitteldrucksäule (100) und einer Niederdrucksäule (102) und Mitteln zur Zuführung von flüssigem Sauerstoff zum Kopf der Mischsäule.

12. Anlage nach Anspruch 11, bei der die Mittel zum indirekten Wärmeaustausch aus einem im Sumpf der Mischsäule (104) angeordneten Austauscher (19) bestehen.

13. Anlage nach Anspruch 12 oder 13 mit Mitteln zur Zuführung von angereicherter Flüssigkeit aus dem Sumpf der Mitteldrucksäule (100) zum Sumpf der Mischsäule (104).

14. Anlage nach Anspruch 11, 12 oder 13 mit Mitteln zum Abziehen eines suaerstoffreichen Kopfgases aus der Mischsäule.

15. Anlage zur Zerlegung von Luft durch Tieftemperaturdestillation und Verdampfung eines flüssigen Sauerstoffstroms (A) durch indirekten Wärmeaustausch mit einem gasförmigen Luftstrom (C), wobei die beiden Ströme (A, C) mindestens zwei Bestandteile enthalten, mit einer Mischsäule (108) und einer mit Luft gespeisten Doppelsäule mit einer Mitteldrucksäule (100) und einer Niederdrucksäule (102, 106), Mitteln zur Speisung des Sumpfes der Mischsäule mit dem Gasstrom, der in der Mischsäule unter Bildung des angereicherten Gasstroms mit dem weniger flüchtigen Bestandteil angereichert wird, Mitteln zur Speisung des Mischsäulenkopfs mit einer Flüssigkeit (F), die an dem weniger flüchtigen Bestandteil reicher als der Gasstrom ist, zur Bildung des angereicherten Gasstroms und Mitteln zur Zuführung des angereicherten Gasstroms zu einem Sumpfverdampfer (21) der Niederdrucksäule (102, 106), in dem er durch indirekten Wärmeaustausch mit dem Flüssigkeitsstrom aus dem Sumpf der Niederdrucksäule kondensiert, wobei die Niederdrucksäule einen Zwischenverdampfer, in dem der Kopfstickstoff aus der Mitteldrucksäule kondensiert, und keinen anderen Verdampfer enthält.

16. Anlage nach Anspruch 15 mit einer Pumpe (13) zur Druckbeaufschlagung der Flüssigkeit aus dem Sumpf der Niederdrucksäule (102, 106) und einem Austauscher (7) zur Verdampfung der gepumpten Flüssigkeit.

17. Anlage nach Anspruch 15 oder 16 mit Mitteln zur Zuführung von zu destillierender gasförmiger Luft zum Sumpf der Mischsäule und zur Mitteldrucksäule.

## Patentansprüche (Patentansprüche für folgende(n) Vertragsstaat(en): BE, ES)

1. Verfahren zur Verdampfung eines Flüssigkeitsstroms durch Wärmeaustausch mit einem kondensierenden Gasstrom (C), wobei die beiden Ströme (C) mindestens zwei Bestandteile enthalten, dadurch gekennzeichnet, daß man den Flüssigkeitsstrom durch Wärmeaustausch mit dem Gasstrom unter Bildung eines verdampften Stroms verdampft und danach den verdampften Strom in einer Mischsäule (104), die über Kopf mit einer Flüssigkeit (F), die an einem weniger flüchtigen Bestandteil reicher als der anzureichernde verdampfte Strom ist, gespeist wird, mit dem weniger flüchtigen Bestandteil anreichert.

2. Verfahren nach Anspruch 1, bei dem man den Gasstrom in einem im Sumpf der Mischsäule (104) angeordneten Austauscher (19) kondensiert.

3. Verfahren nach Anspruch 1 oder 2, bei dem es sich bei dem im Austauscher (19) kondensierenden Gasstrom (C) um Luft handelt, man im Sumpf der Mischsäule (104) durch Wärmeaustausch mit der Luft eine sauerstoffreiche Flüssigkeitsfraktion verdampft, aus dem Sumpf einer Niederdrucksäule (102) einer Doppelsäulen-Luftzerlegungsanlage abgezogenen flüssigen Sauerstoff (F) dem Kopf der Mischsäule, die den Wärme- und Stoffaustausch zwischen der verdampften Flüssigkeit und dem flüssigen Sauerstoff herstellt, zuführt und am Kopf der Mischsäule gasförmigen unreinen Sauerstoff (B) mit einer Reinheit, die geringfügig unter der des die Mischsäule speisenden flüssigen Sauerstoffs liegt, abzieht.

4. Verfahren nach Anspruch 3, bei dem man den flüssigen Sauerstoff vor der Zuführung zur Mischsäule in einer Pumpe (13) mit Druck beaufschlagt.

5. Verfahren nach Anspruch 3 oder 4, bei dem man die Flüssigkeit (G) aus dem Sumpf der Mischsäule der Niederdrucksäule zuführt.

6. Verfahren nach einem der Ansprüche 3 bis 5, bei dem es sich bei der Flüssigkeitsfraktion um ein Gemisch aus angereicherter Flüssigkeit aus der Mitteldrucksäule der Luftzerlegungsanlage und Flüssigkeit aus dem Sumpfboden der Mischsäule handelt.

7. Verfahren zur Zerlegung von Luft in einer Tieftemperaturdestillationsanlage mit einer Mischsäule (108) und einer mit Luft gespeisten Doppelsäule mit einer Mitteldrucksäule (100) und einer Niederdrucksäule (102, 106), in der ein flüssiger Sauerstoffstrom (A) durch Wärmeaustausch mit einem aus kondensierender Luft bestehenden, an dem weniger flüchtigen Bestandteil angereicherten Gasstrom (E) verdampft, wobei die beiden Ströme (A, C) mindestens zwei Bestandteile enthalten, bei dem man den Gasstrom dem Sumpf der Mischsäule (108) zuführt, wo er mit dem weniger flüchtigen Bestandteil unter Bildung des angereicherten Gasstroms angereichert wird, wobei die Mischsäule über Kopf mit einer Flüssigkeit (F), die an dem weniger flüchtigen Bestandteil reicher als der Gasstrom ist, gespeist wird, wobei man den angereicherten Gasstrom enthält, und danach den angereicherten Gasstrom durch Wärmeaustausch mit dem Flüssigkeitsstrom in einem Sumpfverdampfer (21) der Niederdrucksäule (102, 106) kondensiert, wobei die Niederdrucksäule einen Zwischenverdampfer, in dem der Kopfstickstoff aus der Mitteldrucksäule kondensiert wird, und keinen anderen Zwischenverdampfer enthält.

8. Verfahren nach Anspruch 7, bei dem man den im Sumpf der Niederdrucksäule anfallenden Sauerstoff durch Wärmeaustausch mit einem Dampf (E), der sauerstoffreicher als die im Austauscher (21) kondensierende Luft ist, verdampft, wobei der Dampf am Kopf der Mischsäule (108), die den Wärme- und Stoffaustausch zwischen einer zu destillierenden Luftfraktion (C) und einer Flüssigkeit (F), die sauerstoffreicher als die auf einer Zwischenhöhe der Niederdrucksäule entnommene Luft ist, herstellt, abgezogen wird.

9. Verfahren nach Anspruch 8, bei dem man die aus dem Sumpf der Mischsäule (104, 108) abgezogene Flüssigkeit (G) und den kondensierten Dampf der Niederdrucksäule (102) zuführt.

10. Verfahren nach einem der Ansprüche 1 bis 9, bei dem es sich bei dem weniger flüchtigen Bestandteil um Sauerstoff und bei dem flüchtigeren Bestandteil um Stickstoff handelt.

11. Anlage zur Zerlegung von Luft und zur Verdampfung eines Flüssigkeitsstroms durch indirekten Wärmeaustausch mit einem aus Luft bestehenden Gasstrom (C), wobei die beiden Ströme mindestens zwei Bestandteile enthalten, mit Mitteln (19) zum indirekten Wärmeaustausch zwischen dem Gasstrom und dem Flüssigkeitsstrom, einer Mischsäule (104) zum Anreichern des verdampften Flüssigkeitsstroms hinter den Wärmeaustauschmitteln, einer Luftzerlegungs-Doppelsäule mit einer Mitteldrucksäule (100) und einer Niederdrucksäule (102) und Mitteln zur Zuführung von flüssigem Sauerstoff zum Kopf der Mischsäule.

12. Anlage nach Anspruch 11, bei der die Mittel zum indirekten Wärmeaustausch aus einem im Sumpf der Mischsäule (104) angeordneten Austauscher (19) bestehen.

13. Anlage nach Anspruch 12 oder 13 mit Mitteln zur Zuführung von angereicherter Flüssigkeit aus dem Sumpf der Mitteldrucksäule (100) zum Sumpf der Mischsäule (104).

14. Anlage nach Anspruch 11, 12 oder 13 mit Mitteln zum Abziehen eines suaerstoffreichen Kopfgases aus der Mischsäule.

15. Anlage zur Zerlegung von Luft durch Tieftemperaturdestillation und Verdampfung eines flüssigen Sauerstoffstroms (A) durch indirekten Wärmeaustausch mit einem gasförmigen Luftstrom (C), wobei die beiden Ströme (A, C) mindestens zwei Bestandteile enthalten, mit einer Mischsäule (108) und einer mit Luft gespeisten Doppelsäule mit einer Mitteldrucksäule (100) und einer Niederdrucksäule (102, 106), Mitteln zur Speisung des Sumpfes der Mischsäule mit dem Gasstrom, der in der Mischsäule unter Bildung des angereicherten Gasstroms mit dem weniger flüchtigen Bestandteil angereichert wird, Mitteln zur Speisung des Mischsäulenkopfs mit einer Flüssigkeit (F), die an dem weniger flüchtigen Bestandteil reicher als der Gasstrom ist, zur Bildung des angereicherten Gasstroms und Mitteln zur Zuführung des angereicherten Gasstroms zu einem Sumpfverdampfer (21) der Niederdrucksäule (102, 106), in dem er durch indirekten Wärmeaustausch mit dem Flüssigkeitsstrom aus dem Sumpf der Niederdrucksäule kondensiert, wobei die Niederdrucksäule einen Zwischenverdampfer, in dem der Kopfstickstoff aus der Mitteldrucksäule kondensiert, und keinen anderen Verdampfer enthält.

16. Anlage nach Anspruch 15 mit einer Pumpe (13) zur Druckbeaufschlagung der Flüssigkeit aus dem Sumpf der Niederdrucksäule (102, 106) und einem Austauscher (7) zur Verdampfung der gepumpten Flüssigkeit.

17. Anlage nach Anspruch 15 oder 16 mit Mitteln zur Zuführung von zu destillierender gasförmiger Luft zum Sumpf der Mischsäule und zur Mitteldrucksäule.

## Claims (Claims for the following Contracting State(s): DE, FR, GB, IT, NL, SE)

1. Process for the vaporization of a liquid stream (A) by heat exchange with a gas stream (C) which condenses, the two streams (A, C) comprising at least two constituents, characterized in that the liquid stream vapourizes by heat exchange with the gas stream in order to produce a vaporized stream and then the vaporized stream becomes enriched with the less-volatile constituent in a mixing column (104) which is fed at the top with a liquid (F) richer in the less-volatile constituent than the vaporized stream to be enriched.

2. Process according to Claim 1, in which the gas stream condenses in an exchanger (19) located in the bottom of the mixing column (104).

3. Process according to either of Claims 1 and 2, in which the gas stream (C) which condenses in the exchanger (19) is air, a fraction of oxygen-rich liquid is vaporized in the bottom of the mixing column (104) by heat exchange with the air, liquid oxygen (F) withdrawn from the bottom of a low-pressure column (102) of a double-column air separation apparatus is sent into the top of the mixing column, bringing the vaporized liquid and the liquid oxygen into heat and mass exchange with each other, and gaseous impure oxygen (B) of slightly lower purity than the liquid oxygen feeding the mixing column is withdrawn from the top of the mixing column.

4. Process according to Claim 3, in which the liquid oxygen is pressurized in a pump (13) before being sent to the mixing column.

5. Process according to either of Claims 3 and 4, in which the liquid (G) in the bottom of the mixing column is sent to the low-pressure column.

6. Process according to one of Claims 3 to 5, in which the liquid fraction is a mixture of rich liquid coming from the medium-pressure column of the air separation apparatus and of liquid coming from the bottom tray of the mixing column.

7. Process for the separation of air in a cryogenic distillation apparatus comprising a mixing column (108) and a double column fed with air, comprising a medium-pressure column (100) and a low-pressure column (102, 106) in which a liquid oxygen stream (A) vaporizes by heat exchange with a gas stream enriched with the less-volatile constituent (E) consisting of air which condenses, the two streams (A, C) comprising at least two constituents, in which process the gas stream is sent into the bottom of the mixing column (108) where it becomes enriched with the less-volatile constituent in order to form the enriched gas stream, the mixing column being fed at the top with a liquid (F) richer in the less-volatile constituent than the gas stream in order to form the enriched gas stream, and then the enriched gas stream condenses by heat exchange with the liquid stream in a bottom vaporizer (21) of the low-pressure column (102, 106), the said low-pressure column containing an intermediate vaporizer which condenses the nitrogen from the top of the medium-pressure column, and no other intermediate vaporizer.

8. Process according to Claim 7, in which the oxygen produced in the bottom of the low-pressure column is vaporized by heat exchange with a vapour (E), richer in oxygen than air, which condenses in the exchanger (21), the said vapour being withdrawn from the top of the mixing column (108), bringing a fraction of air to be distilled (C) and a liquid (F) richer in oxygen than air, coming from an intermediate level of the low-pressure column, into heat and mass exchange with each other.

9. Process according to Claim 8, in which the liquid (G) withdrawn from the bottom of the mixing column (104, 108) and the condensed vapour are sent into the low-pressure column (102).

10. Process according to one of Claims 1 to 9, in which the less-volatile constituent is oxygen and the more-volatile constituent is nitrogen.

11. Apparatus for the separation of air and the vaporization of a liquid stream by indirect heat exchange with a gas stream (C) consisting of air, the two streams comprising at least two constituents, which apparatus comprises means (19) allowing indirect heat exchange between the gas stream and the liquid stream, a mixing column (104) for enriching the liquid stream vaporized downstream of the means allowing heat exchange, a double air separation column comprising a medium-pressure column (100) and a low-pressure column (102), and means for sending liquid oxygen into the top of the mixing column.

12. Apparatus according to Claim 11, in which the means allowing indirect heat exchange consist of an exchanger (19) located in the bottom of the mixing column (104).

13. Apparatus according to Claim 12 or 13, comprising means for sending rich liquid from the bottom of the medium-pressure column (100) into the bottom of the mixing column (104).

14. Apparatus according to Claim 11, 12 or 13, comprising means for withdrawing a gas from the oxygen-rich top of the mixing column.

15. Apparatus for the separation of air by cryogenic distillation and the vaporization of a liquid oxygen stream (A) by indirect heat exchange with a gaseous air stream (C), the two streams (A, C) comprising at least two constituents, which apparatus comprises a mixing column (108) and a double column fed with air, comprising a medium-pressure column (100) and a low-pressure column (102, 106), means for feeding the bottom of the mixing column with the gas stream which becomes enriched with the less-volatile constituent in the mixing column in order to form the enriched gas stream, means for feeding the top of the mixing column with a liquid (F) richer in the less-volatile constituent than the gas stream, in order to form the enriched gas stream, and means for sending the enriched gas stream into a bottom vaporizer (21) of the low-pressure column (102, 106) where it condenses by indirect heat exchange with the liquid stream in the bottom of the low-pressure column, the said low-pressure column containing an intermediate vaporizer which condenses the nitrogen at the top of the medium-pressure column and no other vaporizer.

16. Apparatus according to Claim 15, comprising a pump (13) for pressurizing the liquid from the bottom of the low-pressure column (102, 106) and an exchanger (7) for vaporizing the pumped liquid.

17. Apparatus according to Claim 15 or 16, comprising means for sending gaseous air to be distilled into the bottom of the mixing column and to the medium-pressure column.

## Claims (Claims for the following Contracting State(s): BE, ES)

1. Process for the vaporization of a liquid stream (A) by heat exchange with a gas stream (C) which condenses, the two streams (A, C) comprising at least two constituents, characterized in that the liquid stream vapourizes by heat exchange with the gas stream in order to produce a vaporized stream and then the vaporized stream becomes enriched with the less-volatile constituent in a mixing column (104) which is fed at the top with a liquid (F) richer in the less-volatile constituent than the vaporized stream to be enriched.

2. Process according to Claim 1, in which the gas stream condenses in an exchanger (19) located in the bottom of the mixing column (104).

3. Process according to either of Claims 1 and 2, in which the gas stream (C) which condenses in the exchanger (19) is air, a fraction of oxygen-rich liquid is vaporized in the bottom of the mixing column (104) by heat exchange with the air, liquid oxygen (F) withdrawn from the bottom of a low-pressure column (102) of a double-column air separation apparatus is sent into the top of the mixing column, bringing the vaporized liquid and the liquid oxygen into heat and mass exchange with each other, and gaseous impure oxygen (B) of slightly lower purity than the liquid oxygen feeding the mixing column is withdrawn from the top of the mixing column.

4. Process according to Claim 3, in which the liquid oxygen is pressurized in a pump (13) before being sent to the mixing column.

5. Process according to either of Claims 3 and 4, in which the liquid (G) in the bottom of the mixing column is sent to the low-pressure column.

6. Process according to one of Claims 3 to 5, in which the liquid fraction is a mixture of rich liquid coming from the medium-pressure column of the air separation apparatus and of liquid coming from the bottom tray of the mixing column.

7. Process for the separation of air in a cryogenic distillation apparatus comprising a mixing column (108) and a double column fed with air, comprising a medium-pressure column (100) and a low-pressure column (102, 106) in which a liquid oxygen stream (A) vaporizes by heat exchange with a gas stream enriched with the less-volatile constituent (E) consisting of air which condenses, the two streams (A, C) comprising at least two constituents, in which process the gas stream is sent into the bottom of the mixing column (108) where it becomes enriched with the less-volatile constituent in order to form the enriched gas stream, the mixing column being fed at the top with a liquid (F) richer in the less-volatile constituent than the gas stream in order to form the enriched gas stream, and then the enriched gas stream condenses by heat exchange with the liquid stream in a bottom vaporizer (21) of the low-pressure column (102, 106), the said low-pressure column containing an intermediate vaporizer which condenses the nitrogen from the top of the medium-pressure column, and no other intermediate vaporizer.

8. Process according to Claim 7, in which the oxygen produced in the bottom of the low-pressure column is vaporized by heat exchange with a vapour (E), richer in oxygen than air, which condenses in the exchanger (21), the said vapour being withdrawn from the top of the mixing column (108), bringing a fraction of air to be distilled (C) and a liquid (F) richer in oxygen than air, coming from an intermediate level of the low-pressure column, into heat and mass exchange with each other.

9. Process according to Claim 8, in which the liquid (G) withdrawn from the bottom of the mixing column (104, 108) and the condensed vapour are sent into the low-pressure column (102).

10. Process according to one of Claims 1 to 9, in which the less-volatile constituent is oxygen and the more-volatile constituent is nitrogen.

11. Apparatus for the separation of air and the vaporization of a liquid stream by indirect heat exchange with a gas stream (C) consisting of air, the two streams comprising at least two constituents, which apparatus comprises means (19) allowing indirect heat exchange between the gas stream and the liquid stream, a mixing column (104) for enriching the liquid stream vaporized downstream of the means allowing heat exchange, a double air separation column comprising a medium-pressure column (100) and a low-pressure column (102), and means for sending liquid oxygen into the top of the mixing column.

12. Apparatus according to Claim 11, in which the means allowing indirect heat exchange consist of an exchanger (19) located in the bottom of the mixing column (104).

13. Apparatus according to Claim 12 or 13, comprising means for sending rich liquid from the bottom of the medium-pressure column (100) into the bottom of the mixing column (104).

14. Apparatus according to Claim 11, 12 or 13, comprising means for withdrawing a gas from the oxygen-rich top of the mixing column.

15. Apparatus for the separation of air by cryogenic distillation and the vaporization of a liquid oxygen stream (A) by indirect heat exchange with a gaseous air stream (C), the two streams (A, C) comprising at least two constituents, which apparatus comprises a mixing column (108) and a double column fed with air, comprising a medium-pressure column (100) and a low-pressure column (102, 106), means for feeding the bottom of the mixing column with the gas stream which becomes enriched with the less-volatile constituent in the mixing column in order to form the enriched gas stream, means for feeding the top of the mixing column with a liquid (F) richer in the less-volatile constituent than the gas stream, in order to form the enriched gas stream, and means for sending the enriched gas stream into a bottom vaporizer (21) of the low-pressure column (102, 106) where it condenses by indirect heat exchange with the liquid stream in the bottom of the low-pressure column, the said low-pressure column containing an intermediate vaporizer which condenses the nitrogen at the top of the medium-pressure column and no other vaporizer.

16. Apparatus according to Claim 15, comprising a pump (13) for pressurizing the liquid from the bottom of the low-pressure column (102, 106) and an exchanger (7) for vaporizing the pumped liquid.

17. Apparatus according to Claim 15 or 16, comprising means for sending gaseous air to be distilled into the bottom of the mixing column and to the medium-pressure column.
